# EUROPÄISCHE PATENTSCHRIFT

(11) **EP 1 798 828 B1**
(45) Veröffentlichungstag und Bekanntmachung des Hinweises auf die Patenterteilung: **25.04.2012**
(21) Anmeldenummer: 06025062.8
(22) Anmeldetag: 05.12.2006
(51) Int. Cl.: H02G 3/04, H02G 3/18

(54) **Freistehende Säule zur Versorgung von Arbeitsplätzen**
Free-standing column for feeding workplaces
Colonne indépendante d'alimentation de postes de travail

(30) Priorität: 15.12.2005 DE 202005019587 U
(43) Veröffentlichungstag der Anmeldung: 20.06.2007
(73) Patentinhaber: Tehalit GmbH, 67716 Heltersberg (DE)
(72) Erfinder: Arnold, Hans- Joachim, 67706 Krickenbach (DE)
(74) Vertreter: Patentanwälte Bitterich, Dr. Keller, Schwertfeger

(56) Entgegenhaltungen:
- WO-A-02/091536
- DE-U1- 20 312 607
- US-A- 4 278 834

## Beschreibung

Die Erfindung betrifft freistehende Säulen zur Versorgung von Arbeitsplätzen mit Energie und/oder Information gemäß dem Oberbegriff des Anspruchs 1.

Raumsäulen zur Versorgung von Arbeitsplätzen mit Energie und/oder Information sind beispielsweise in Büroräumen Stand der Technik. Es gibt sie in zwei Ausführungsformen. Bei einer Ausführungsform sind die Raumsäulen zwischen Boden und Decke verspannt; die Zuführung der Kabel und Leitungen erfolgt je nach Bedarf durch den Hohlboden oder durch die abgehängte Decke. Bei der anderen Ausführungsform steht die Säule frei auf dem Boden, die Zuführung der Kabel und Leitungen erfolgt von der Decke aus durch eine flexible Kabelführungskette.

Die US 4 278 834 zeigt eine solche Säule mit Kabelführungskette zur Decke. Allerdings steht diese Säule nicht frei sondern ist Bestandteil einer Raumtrennwand.

Der vorliegenden Erfindung liegt die Aufgabe zugrunde, eine völlig freistehende Säule der eingangs genannten Art anzugeben, die dank eines stabilen Fußes frei steht und bei der die Verbindung zwischen Fuß und Säule schnell, sicher, spielfrei und toleranzunempfindlich ausgeführt ist.

Diese Aufgabe wird gelöst durch eine Säule mit den Merkmalen des Anspruchs 1.

Dank der Verwendung eines Keils ist die Verbindung zwischen Fuß und Säule bzw. deren Endplatte schnell, sicher, spielfrei und toleranzunempfindlich herstellbar und bei Bedarf genauso schnell wieder lösbar. Außerdem ist die Konstruktion auch von Laien handhabbar.

Gemäß einer Ausgestaltung der Erfindung besitzen Öffnung und Zapfen einen polygonalen Querschnitt. Dadurch wird ohne weitere Hilfsmittel eine korrekte Positionierung der Säule auf dem Fuß erreicht.

Vorzugsweise ist der Zapfen leicht konisch. Dies erleichtert zunächst einmal das Aufsetzen von Säule und Endplatte.

Mit einer Weiterbildung ist der Zapfen am Fuß befestigt, wobei der Fuß eine entsprechende vorzugsweise konische Öffnung besitzt. Diese ermöglicht die getrennte Herstellung von Fuß und Zapfen.

Gemäß einer Ausgestaltung der Erfindung besitzt der Keil einen Kopf. An diesem Kopf können Werkzeuge angesetzt werden, die das Lösen des Keils erleichtern.

Gemäß einer bevorzugten Ausgestaltung der Erfindung besteht der Fuß aus Metallguss, vorzugsweise aus Grauguss.

Die Erfindung betrifft ferner ein Verfahren zur Versorgung von Arbeitsplätzen mit Energie und/oder Informationen, umfassend das Befestigen einer Säule mit einem Hohlprofil, einem Fuß und einer Kabelführungskette am fußseitigen Ende des Hohlprofils an einer Endplatte, wobei die Endplatte eine Öffnung besitzt, der Fuß einen Zapfen passend zur Öffnung besitzt, der Zapfen eine Queröffnung besitzt und die Queröffnung einen Keil aufnimmt, der Hohlprofil und Endplatte am Fuß fixiert.

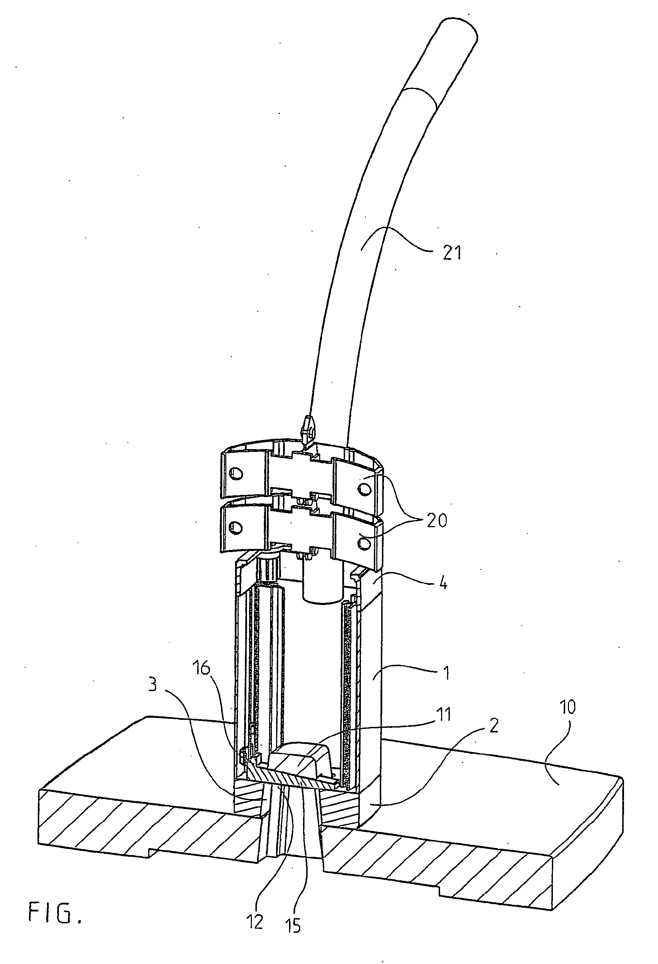

Anhand der Zeichnung soll die Erfindung in Form des Ausführungsbeispiels näher erläutert werden.

Die Figur zeigt eine freistehende Säule zur Versorgung von Arbeitsplätzen mit Energie und/oder Information. Man erkennt ein Hohlprofil 1, welches mit Hilfe eines Deckels (nicht dargestellt) verschließbar ist. Am unteren Ende des Hohlprofils 1 ist eine Endplatte 2 befestigt. Am oberen Ende des Hohlprofils 1 ist ein Anschlussprofil 4 befestigt, welches die Verbindung zu einer Kabelführungskette 20 herstellt, die elektrische Kabel und Leitungen 21 von der Raumdecke (nicht dargestellt) in das Hohlprofil 1 führt.

Die Säule 1, 2 , 4 steht auf einem massiven Fuß 10 aus Metallguss, insbesondere Grauguss. Der Fuß 10 besitzt einen zentralen Zapfen 11. Der Zapfen 11 und die dazugehörende Öffnung in der Endplatte 2 sind leicht konisch und besitzen einen polygonalen Querschnitt. Dadurch kann die Säule 1, 2, 4 über den Zapfen 11 gestülpt und auf den Fuß 10 aufgesetzt werden.

Zur Befestigung der Säule 1, 2, 4 mit dem Fuß 10 ist in dem Zapfen 11 eine Queröffnung 12 vorgesehen. In diese wird ein Keil 15 so tief eingesteckt, bis Fuß 10 und Säule 1, 2, 4 fest miteinander verbunden sind.

Der Keil 15 besitzt einen Kopf 16, an dem ein Keilzieher angesetzt werden kann, falls Fuß 10 und Säule 1, 2, 4 wieder getrennt werden müssen.

## Patentansprüche

1. Freistehende Säule zur Versorgung von Arbeitsplätzen mit Energie und/oder Information, umfassend
- ein Hohlprofil (1),
- einen Fuß (10)
- und eine Kabelführungskette (20),
**gekennzeichnet durch** die Merkmale
- am fussseitigen Ende des Hohlprofils (1) ist eine Endplatte (2) befestigt,
- die Endplatte (2) besitzt eine Öffnung (3),
- der Fuß (10) besitzt einen Zapfen (11), passend zur Öffnung (3),
- der Zapfen (11) besitzt eine Queröffnung (12),
- die Queröffnung (12) nimmt einen Keil (15) auf, der Hohlprofil (1) und Endplatte (2) am Fuß (10) fixiert.

2. Säule nach Anspruch 1, **gekennzeichnet durch** das Merkmal
- Öffnung (3) und Zapfen (11) besitzen einen polygonalen Querschnitt.

3. Säule nach Anspruch 1 oder 2, **gekennzeichnet durch** das Merkmal
- der Zapfen (11) ist leicht konisch.

4. Säule nach Anspruch 1, 2 oder 3, **gekennzeichnet durch** das Merkmal
- der Zapfen (11) ist am Fuß (10) befestigt.

5. Säule nach wenigstens einem der Ansprüche 1 bis 4, **gekennzeichnet durch** das Merkmal
- der Keil (15) besitzt einen Kopf (16).

6. Säule nach wenigstens einem der Ansprüche 1 bis 5, **gekennzeichnet durch** das Merkmal
- der Fuß (10) besteht aus Metallguss.

7. Säule nach wenigstens einem der Ansprüche 1 bis 6, **gekennzeichnet durch** das Merkmal
- der Fuß (10) besteht aus Grauguss.

8. Verfahren zur Versorgung von Arbeitsplätzen mit Energie und/oder Informationen, umfassend das Befestigen einer Säule mit einem Hohlprofil (1), einem Fuß (10) und einer Kabelführungskette (20) am fußseitigen Ende des Hohlprofils (1) mit einer Endplatte (2), wobei die Endplatte (2) eine Öffnung (3) besitzt, der Fuß (10) einen Zapfen (11) passend zur Öffnung (3) besitzt, der Zapfen (11) eine Queröffnung (12) besitzt, die Queröffnung (12) einen Keil (15) aufnimmt, der Hohlprofil (1) und Endplatte (2) am Fuß (10) fixiert.

9. Verfahren nach Anspruch 8, **gekennzeichnet durch** das Merkmal:
- die Säule enthält die zusätzlichen Merkmale der Ansprüche 2 bis 7.

## Claims

1. A free-standing column for supplying workplaces with power and/or information, comprising
- a hollow profile (1),
- a foot (10),
- and a cable-guiding track (20),
**characterised by** the features
- an end plate (2) is secured at end of the hollow profile (1) on the foot side,
- the end plate (2) has an opening (3),
- the foot (10) has a pin (11) which fits the opening (3),
- the pin (11) has a transverse opening (12),
- the transverse opening (12) accommodates a wedge (15) which fixes the hollow profile (1) and end plate (2) on the foot (10).

2. A column according to Claim 1, **characterised by** the feature
- the opening (3) and pin (11) are of polygonal cross-section.

3. A column according to Claim 1 or 2, **characterised by** the feature
- the pin (11) is slightly conical.

4. A column according to Claims 1,2 or 3, **characterised by** the feature
- the pin (11) is fastened to the foot (10).

5. A column according to at least one of Claims 1 to 4, **characterised by** the feature
- the wedge (15) has a head (16).

6. A column according to at least one of Claims 1 to 5, **characterised by** the feature
- the foot (10) consists of cast metal.

7. A column according to at least one of Claims 1 to 6, **characterised by** the feature
- the foot (10) consists of grey cast iron.

8. A method of supplying workplaces with power and/or information, comprising fastening a column with a hollow profile (1), a foot (10) and a cable-guiding track (20) at the end of the hollow profile (1) on the foot side to an end plate (2), wherein the end plate (2) has an opening (3), the foot (10) has a pin (11) fitting the opening (3), the pin (11) has a transverse opening (12), which transverse opening (12) accommodates a wedge (15) which fixes the hollow profile (1) and end plate (2) on the foot (10).

9. A method according to Claim 8, **characterised by** the feature
- the column comprises the additional features of Claims 2 to 7.

## Revendications

1. Colonne autoporteuse pour alimenter des postes de travail en énergie et/ou en informations, comprenant :
- un profilé creux (1),
- un socle (10),
- et une chaîne de guidage de câbles (20),
**caractérisée par** les caractéristiques suivantes :
- une plaque terminale (2) est fixée à l'extrémité côté socle du profilé creux (1),
- la plaque terminale (2) possède une ouverture (3),
- le socle (10) possède un tenon (11), adapté à l'ouverture (3),
- le tenon (11) possède une ouverture transversale (12),
- l'ouverture transversale (12) reçoit une clavette (15), qui immobilise le profilé creux (1) et la plaque terminale (2) sur le socle (10).

2. Colonne selon la revendication 1, **caractérisée par** la caractéristique suivante :
- l'ouverture (3) et le tenon (11) possèdent une section polygonale.

3. Colonne selon la revendication 1 ou 2, **caractérisée par** la caractéristique suivante :
- le tenon (11) est légèrement conique.

4. Colonne selon la revendication 1, 2 ou 3, **caractérisée par** la caractéristique suivante :
- le tenon (11) est fixé sur le socle (10).

5. Colonne selon l'une des revendications 1 à 4, **caractérisée par** la caractéristique suivante :
- la clavette (15) possède une tête (16).

6. Colonne selon l'une des revendications 1 à 5, **caractérisée par** la caractéristique suivante :
- le socle (10) est réalisé en métal coulé.

7. Colonne selon l'une des revendications 1 à 6, **caractérisée par** la caractéristique suivante :
- le socle (10) est réalisé en fonte grise.

8. Procédé pour alimenter des postes de travail en énergie et/ou en informations, comprenant la fixation d'une colonne dotée d'un profilé creux (1), d'un socle (10) et d'une chaîne de guidage de câbles (20), à une plaque terminale (2) à l'extrémité côté socle du profilé creux (1), sachant que la plaque terminale (2) possède une ouverture (3), que le socle (10) possède un tenon (11) adapté à l'ouverture (3), que le tenon (11) possède une ouverture transversale (12), et que l'ouverture transversale (12) reçoit une clavette (15) qui immobilise le profilé creux (1) et la plaque terminale (2) sur le socle (10).

9. Procédé selon la revendication 8, **caractérisé par** la caractéristique suivante :
- la colonne comprend les caractéristiques supplémentaires des revendications 2 à 7.
